# EUROPEAN PATENT APPLICATION

(11) **EP 3 076 295 A1**
(43) Date of publication of application: **05.10.2016**
(21) Application number: 14794637.0
(22) Date of filing: 13.06.2014
(51) Int. Cl.: G06F 9/50

(54) **SYSTEM RESOURCE BALANCE ADJUSTMENT METHOD AND DEVICE**

(30) Priority: 27.11.2013 CN 201310616176
(71) Applicant: ZTE Corporation, Shenzhen, Guangdong 518057 (CN)
(72) Inventor: LI, Guining, Shenzhen Guangdong 518057 (CN)
(74) Representative: Mozzi, Matteo
(86) International application number: PCT/CN2014/079850
(87) International publication number: WO 2014/180443

(57) **Abstract**

The disclosure discloses a system resource balance adjustment method and device. The method comprises: categorizing high speed buffer memory resources according to a type of disk accessed, and respectively determining, according to service requirements, a target value for configuration parameters of the high speed buffer memory resources of each category; when a system is in operation, periodically detecting whether the high speed buffer memory resources are balanced, when it is determined that the high speed buffer memory resources are required to be adjusted, adjusting front-end page allocation and/or back-end resources corresponding to imbalanced high speed buffer memory resource categories according to the target value. The technical solution of the disclosure allows for each type of service to more reasonably occupy shared resources, and adjusts the performance of the entire system to a required mode.

## Description

### Technical Field

The disclosure relates to the technical filed of computers, and in particular to a system resource balance adjustment method and device.

### Background

With the development of the storage area network (SAN for short) storage technology, for one and the same disk array, there is a requirement for the mixed insertion of multiple types of disks. For example: since the same disk array may be connected to different hosts, and different hosts may be used for completely different functions, the functions provided by the hosts always match the performance requirements of services, and the Input Output (IO for short) performance that can be provided by the array ultimately depends on the type of disk.

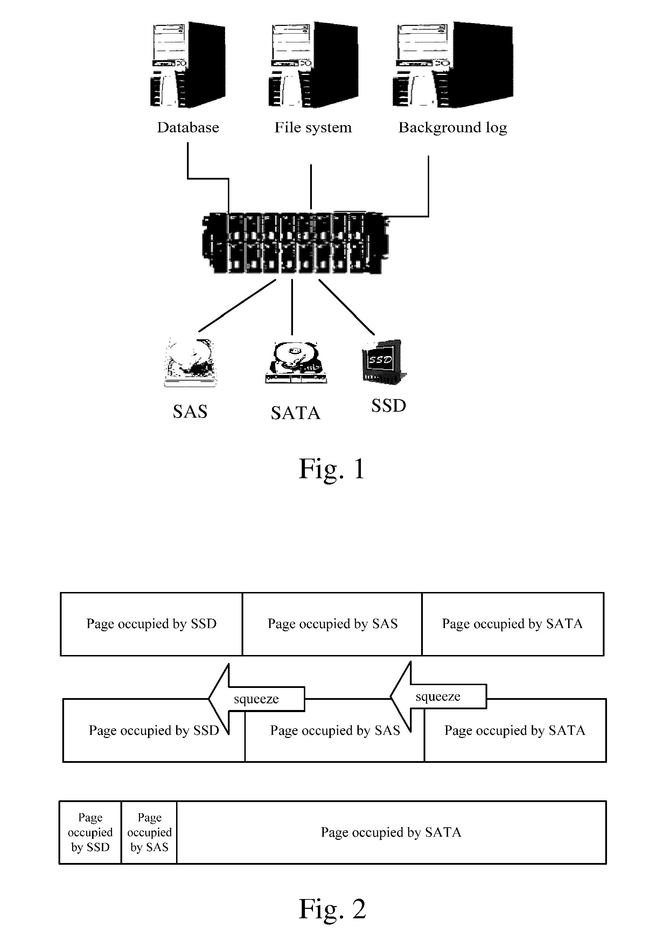

Fig. 1 is a schematic diagram showing the connection of a simple and common disk array during practical implementation in the related art. As shown in Fig. 1, the disk array is connected to various hosts via multiple FC ports. Service types borne by the various hosts are quite different, and performance points concerned by the various hosts are also different, for example: what is concerned with regard to a database system is a query time efficiency, and what is concerned with regard to a file is input/output operations per second (IOPS for short) and bandwidth, while a background log is not sensitive to response time thereof. As a consequence, the disk types selected by the various hosts at last are also significantly different, for example, since an actual data volume of a database-based service for real input/output is not big, but requires a higher response time index, a solid state disk (SSD for short) is selected; and for the same reasoning, a file system service type selects a serial attached SCSI (SAS for short) disk, and the background log more tends to select a serial advanced technology attachment (SATA for short) with the highest space cost-performance ratio.

Since the entire IO flow is removed from the disk after the calculation inside the controller, different IOs share resources inside a disk array controller, and these resources contain a physical link bandwidth (for example, an FC link and a back-end disk link), a CPU resource, a high speed buffer memory (CACHE) resource, etc. In addition, since a strategy of writeback and removal-from-disk is usually used, such resource sharing is especially more commonly used for CACHE resources and back-end link resources. In general, these resources are temporarily occupied in the IO flow; once the entire IO flow ends, these resources will be released, and these released resources will be preempted by other IOs; and this is basically similar to the concept of a shared memory resource pool implemented by an OS system, but in such a scenario, the concept of resource sharing is expanded.

Since the occupation time of each IO for these shared resources is imbalanced, preemption opportunities thereof will not be completely equal, for example, the occupation time of an SSD disk-based service for these resources is very little, and the opportunity for realizing rotation is relatively fast; however, since the performance of the SATA disk itself is relatively poor, the occupation time of a SATA disk-based resource for these resources is relatively long.

Fig. 2 is a schematic diagram of CACHE resource occupation of services of three types of disks in the related art. As shown in Fig. 2, when the system has just started operation, the CACHE resources occupied by the services of the three types of disks are basically the same. With the operation of the entire system, since the entire disk brushing or input time of the IO of the SATA is relatively long, rendering resource rotation efficiency of the CACHE occupied thereby relatively low, after long time operation, the service on the SATA disk gradually occupies the CACHE resources (mainly page resources) occupied by the services of SSD and SAS disks; and finally, since the entire CACHE is basically occupied by the service corresponding the SATA disk, the rotation efficiency of the resources occupied by the services corresponding to the SSD and SAS disks will also become consistent with that of the resource occupied by the service corresponding to the SATA, and at the moment, the "squeeze" process stops. With respect to host services, this condition shows the characteristic that the host services corresponding to the SSD and SAS disks are getting slower and slower, until the performance thereof reduces to the same level as that of the service corresponding to the SATA disk. The purpose of an application using different types of disks for different services is to achieve different representations for the performance thereof. Obviously, this service operation condition is not a desired result of the application services.

### Summary

A system resource balance adjustment method and device are provided by embodiments of the disclosure, so as to at least solve the above-mentioned problem of unreasonable shared resource occupation of each type of service caused by the mixed insertion of multiple types of disks.

According to an embodiment of the disclosure, a system resource balance adjustment method is provided, comprising: categorizing high speed buffer memory resources according to a type of disk accessed, and respectively determining, according to service requirements, a target value for configuration parameters of the high speed buffer memory resources of each category; and when a system is in operation, periodically detecting whether the high speed buffer memory resources are balanced, when it is determined that the high speed buffer memory resources are required to be adjusted, adjusting front-end page allocation and/or back-end resources corresponding to imbalanced high speed buffer memory resource categories according to the target value.

Optionally, the configuration parameters comprise at least one of the following: a page resource required to be reserved by a service, input/output operations per second (IOPS) corresponding to the service, a bandwidth occupied by the service input output (IO) and an IO response time.

Optionally, periodically detecting whether the high speed buffer memory resources are balanced comprises: detecting whether a deviation degree of a current value and the target value of all or some of the configuration parameters of the high speed buffer memory resources of each category is greater than a pre-determined threshold value, and when it is judged that the deviation degree is greater than or equal to the pre-determined threshold value, determining that the high speed buffer memory resources are required to be adjusted.

Optionally, adjusting the front-end page allocation and/or the back-end resources corresponding to the imbalanced high speed buffer memory resource categories according to the target value comprises: circularly adjusting, according to the target value, the front-end page allocation and/or the back-end resources corresponding to the imbalanced high speed buffer memory resource categories in a preset adjustment amplitude.

Optionally, the preset adjustment amplitude does not exceed ten percent of an overall amplitude that is required to be adjusted.

Optionally, adjusting the front-end page allocation of the high speed buffer memory specifically comprises: when a front-end page allocation request of a service corresponding to a disk of a certain type arrives, judging whether the amount of front-end page resources occupied by the disk has exceeded a limit; and when it is judged that the amount of front-end page resources occupied by the disk has exceeded the limit, prohibiting the front-end page allocation for the disk, and releasing the front-end page resources occupied by the disk.

Optionally, the method above further comprising: categorizing the released page resource according to the type of the disk; and according to the category of the released page resource, determining that the released page resource is still to be used by a corresponding type of disk, or determining that the released page resource is to be used by other types of disks.

Optionally, adjusting the back-end resources of the high speed buffer memory comprises: by controlling a total number of IOs of services, sent from the high speed buffer memory but not returned to the high speed buffer memory, corresponding to disks of each type, adjusting the back-end resources of the high speed buffer memory.

According to another embodiment of the disclosure, a system resource balance adjustment device is provided, comprising: a setting module, configured to, categorize high speed buffer memory resources according to a type of disk accessed, and, respectively determine , according to service requirements, a target value for configuration parameters of the high speed buffer memory resources of each category; and an adjustment module, configured to, when a system is in operation, periodically detect whether the high speed buffer memory resources are balanced, when it is determined that the high speed buffer memory resources are required to be adjusted, adjusting front-end page allocation and/or back-end resources corresponding to imbalanced high speed buffer memory resource categories according to the target value.

Optionally, the configuration parameters comprise at least one of the following: a page resource required to be reserved by a service, input/output operations per second (IOPS) corresponding to the service, a bandwidth occupied by the service input output (IO) and an IO response time.

Optionally, the adjustment module is configured to: detect whether a deviation degree of a current value and the target value of all or some of the configuration parameters of the high speed buffer memory resources of each category is greater than a pre-determined threshold value, and when it is judged that the deviation degree is greater than or equal to the pre-determined threshold value, determine that the high speed buffer memory resources are required to be adjusted.

Optionally, the adjustment module is configured to: circularly adjust, according to the target value, the front-end page allocation and/or the back-end resources corresponding to the imbalanced high speed buffer memory resource categories in a preset adjustment amplitude.

Optionally, the preset adjustment amplitude does not exceed ten percent of an overall amplitude that is required to be adjusted.

Optionally, the adjustment module is configured to: when a page allocation request of a service corresponding to a disk of a certain type arrives, judge whether the amount of front-end page resources occupied by the disk has exceeded a limit; and when it is judged that the amount of front-end page resources occupied by the disk has exceeded the limit, prohibit the front-end page allocation for the disk, and release the front-end page resources occupied by the disk.

Optionally, the adjustment module is further configured to: categorize the released page resource according to the type of the disk; according to the category of the released page resource, determine that the released page resource is still to be used by a corresponding type of disk, or determining that the released page resource is to be used by other types of disks for use.

Optionally, the adjustment module is configured to: by controlling a total number of IOs of services, sent from the high speed buffer memory but not returned to the high speed buffer memory, corresponding to disks of each type, adjust the back-end resources of the high speed buffer memory.

The beneficial effects of the embodiments of the disclosure are as follows:
by means of a delayed response, the problem of unreasonable shared resource occupation of each category of service caused by the mixed insertion of multiple types of disks in the related art is solved, thereby allowing for each category of service to more reasonably occupy shared resources, and adjusting the performance of the entire system to a required mode.

The above-mentioned description is only a summary of the technical solutions of the embodiments of the disclosure, and in order to understand the technical means of the embodiments of the disclosure more clearly, the technical means can be implemented according to the contents of the specification; in addition, in order to make the above-mentioned and other purposes, features and advantages of the embodiments of the disclosure more obvious and understandable, the specific implementations of the disclosure are particularly illustrated.

### Brief Description of the Drawings

By reading the detailed description of the preferred implementations hereinafter, a variety of other advantages and benefits become clear to a person skilled in the art. Drawings are only used to illustrate the purpose of the preferred implementations, but are not considered as limiting the disclosure. In addition, throughout the drawings, the same reference symbols indicates the same components. In the drawings:
Fig. 1 is a connection schematic diagram of the actual use of a simple and common disk array in the related art;
Fig. 2 is a schematic diagram of CACHE resource occupation of services of three types of disks in the related art;
Fig. 3 is a flowchart of a system resource balance adjustment method according to an embodiment of the disclosure;
Fig. 4 is a signalling flowchart illustrating detailed process of a system resource balance adjustment method according to an embodiment of the disclosure;
Fig. 5 is a schematic diagram showing the detailed flow of adjusting front-end page allocation and back-end resources according to an embodiment of the disclosure; and
Fig. 6 is a structural schematic diagram of a system resource balance adjustment device according to an embodiment of the disclosure.

### Detailed description of embodiments

Exemplary embodiments of the disclosure will be described in more detail below with reference to the accompanying drawings. Although the exemplary embodiments of the disclosure are displayed in the drawings, it should be understood that the disclosure can be realized in various forms and should not be limited to the embodiments set forth herein. Inversely, providing these embodiments is for understanding the disclosure more thorough and integrally conveying the range of the disclosure to a person skilled in the art.

In order to solve the problem of unreasonable shared resource occupation of each category of service caused by the mixed insertion of multiple types of disks in the related art, provided in the disclosure are a system resource balance adjustment method and device, so as to achieve the purpose of allowing for each category of service to reasonably occupy shared resources by means of a delayed response. The disclosure is further described in details in combination with the drawings and embodiments below. It should be understood that specific embodiments described here are only used to explain the disclosure and not intended to limit the disclosure.

### Method embodiments

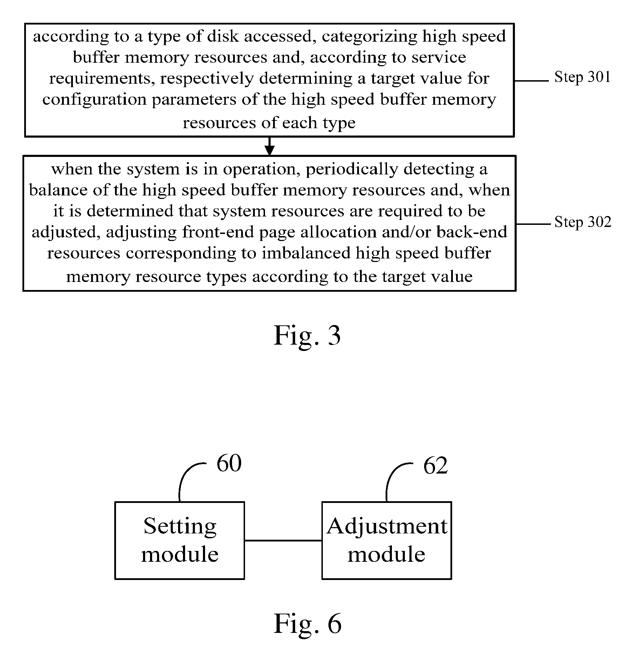

According to the embodiments of the disclosure, a system resource balance adjustment method is provided. Fig. 3 is a flowchart of a system resource balance adjustment method according to an embodiment of the disclosure; and as shown in Fig. 3, the system resource balance adjustment method according to an embodiment of the disclosure comprises the following processing:
step 301, categorizing high speed buffer memory resources according to a type of disk accessed; and respectively determining, according to service requirements, a target value for configuration parameters of the high speed buffer memory resources of each category, wherein the configuration parameters comprise at least one of the following: a page resource required to be reserved by a service, input/output operations per second (IOPS) corresponding to the service, a bandwidth occupied by the service input output (IO) and an IO response time.
Step 302, when a system is in operation, periodically detecting whether the high speed buffer memory resources are balanced; when it is determined that the high speed buffer memory resources are required to be adjusted, adjusting front-end page allocation and/or back-end resources corresponding to imbalanced high speed buffer memory resource categories according to the target value.

In step 302, periodically detecting whether the high speed buffer memory resources are balanced specifically comprises:
detecting whether a deviation degree of a current value and the target value of all or some of the configuration parameters of the high speed buffer memory resources of each category is greater than a pre-determined threshold value, and when it is judged that the deviation degree is greater than or equal to the pre-determined threshold value, determining that the high speed buffer memory resources are required to be adjusted.

In step 302, adjusting the front-end page allocation and/or the back-end resources corresponding to the imbalanced high speed buffer memory resource categories according to the target value specifically comprises:
circularly adjusting, according to the target value, the front-end page allocation and/or the back-end resources corresponding to the imbalanced high speed buffer memory resource categories in a preset adjustment amplitude, wherein the preset adjustment amplitude does not exceed ten percent of an overall amplitude that is required to be adjusted.

In step 302, adjusting the front-end page allocation of the high speed buffer memory specifically comprises:
1. when a front-end page allocation request of a service corresponding to a disk of a certain type arrives, judging whether the amount of front-end page resources occupied by the disk has exceeded a limit; and
2. when it is judged that the amount of front-end page resources occupied by the disk has exceeded the limit, prohibiting the front-end page allocation for the disk, and releasing the front-end page resources occupied by the disk. Preferably, the following processing may be performed:
3. categorizing the released page resource according to the type of the disk; and
4. according to the category of the released page resource, determining that the released page resource is still to be used by a corresponding type of disk, or determining that the released page resource is to be used by other types of disks.

In step 302, adjusting the back-end resources of the high speed buffer memory specifically comprises:
by controlling a total number of IOs of services, sent from the high speed buffer memory but not returned to the high speed buffer memory, corresponding to disks of each type, adjusting the back-end resources of the high speed buffer memory.

The technical solution of the embodiment of the disclosure will be illustrated in combination with the accompanying drawings hereinafter.

In the embodiment of the disclosure, the attribute of the CACHE resource is required to be divided into three types: SSD, SAS and SATA; of course, if there are more types of disks, the attribute thereof may be divided into more types. When the target value is set, the quantity of resources initially occupied by each service is different due to different requirements thereof, for example, in the case where there is a 4G page resource, the target value can be set as table 1:

**Table 1**

| SSD | SAS | SATA |
|---|---|---|
| 20% | 40% | 40% |
| 800 MB | 1600 MB | 1600 MB |
| IOPS 2000 | IOPS 800 / Bandwidth 500 MBPS | Bandwidth 200 MBPS |

Assuming that it is considered that, under the configuration as shown in table 1, the IO performance of the entire system can achieve our expected purpose via an external configuration input, then this value would be the target value; and after an imbalanced condition occurs hereinafter, the embodiments of the disclosure will perform adjustment according to this target value.

Subsequently, after the system is in operation, a method for periodic detection is required to check whether the system has seriously deviated from the target value. Generally, since the speed when the IO is delivered from the host is very fast, and the front-end does not perform any type-based control, it would be easy to deviate from the target value by 30% or more; therefore, when deviating from the target value by 30% or more, it is required to start adjustment.

When the system resource is adjusted, since the back-end contains many resources, for example, the bandwidth on hardware, etc.; however, after using a writeback method, the CACHE is generally an initiation point of the back-end IO, and therefore, in the technical solution of the embodiment of the disclosure, all the shared resources used by the back-end is considered to be resources provided by the same shared resource pool. Therefore, when controlling the back-end, it is only required to control an allocation limitation on the above-mentioned shared resource pool.

Generally, the IO of each service is in concurrence, and in the case where the traffic of the front-end IO is relatively large, in order to control the occupation proportion thereof for back-end support, the emphasis to be adjusted is controlling the number of concurrent IOs of services corresponding to disks of each type down from the CACHE, wherein the number of concurrent IOs refers to the total number of IOs not returned to the CACHE yet after the IOs are sent from the CACHE.

After the IO starts from the CACHE, it is equivalent to the IO occupying some back-end resources (such back-end resources coming from the aforementioned shared resource pool); obviously, by limiting the number of concurrent IOs, the limitation to shared resources occupation by the services corresponding to various different types of disks is achieved. By means of the target value as mentioned in table 1, it can be detected whether the above-mentioned limitation has reached the target value.

Obviously, by only controlling back-end concurrence, the purpose of allocating the back-end resources according to a forethought proportion can only be achieved; however, since the allocation of the page resource of the CACHE is completed when the IO is delivered to a controller, although the back-end concurrence is controlled, the service of the SATA may still preempt the memory that should be occupied by the SAS and SSD, and this part of memory should be adjusted through the limitation on the page allocation.

For example, when the quantity of page resources occupied by the SSD is only 500 MB, this represents that the page of this type has been preempted by other services, and at the moment, adjustment and limitation processes are required to be started; when a page allocation request arrives, it is required to evaluate whether the pages can be allocated thereby, for example, for a SATA service type, if it is found that the adjustment process has been started during page allocation, it is required to check whether the pages allocated thereto have been overrun; and once the pages allocated thereto have been overrun, the page allocation request thereof is not responded to, and at the same time, the pages occupied by the disk of this type are released; specifically, when it is found that the pages allocated thereto have been overrun, the released pages should be classified, for instance, the pages occupied and released by the SSD type are stilled to be used by the SSD; however, if the SATA has been overrun, when the pages are released thereby, these pages cannot be used by the SATA service, because other (SSD or SAS) pages occupied thereby are required to be returned at the moment.

When the page requirement and the requirements of bandwidth, IOPS and response time corresponding to disks of each type of the entire system reach the target value, the entire adjustment flow ends; for the page allocation and back-end concurrence, the limitation on the adjustment above can be given up, and the advantage of doing this is that, for example, in the case where the requirements corresponding to the SSD or SAS are satisfied, the purpose of competing for resources can be achieved according the data volume of a service delivered; and for the service, larger traffic also requires the inclination of the shared resource, and of course, once the inclination has been overrun, it needs to be adjusted and controlled.

It can be seen from the description above that the technical solution of the embodiment of the disclosure is based on a response mechanism and uses adjustment of the response mechanism, and the objective is to be able to adjust the performance of the entire system to a required mode when a serious deviation occurs.

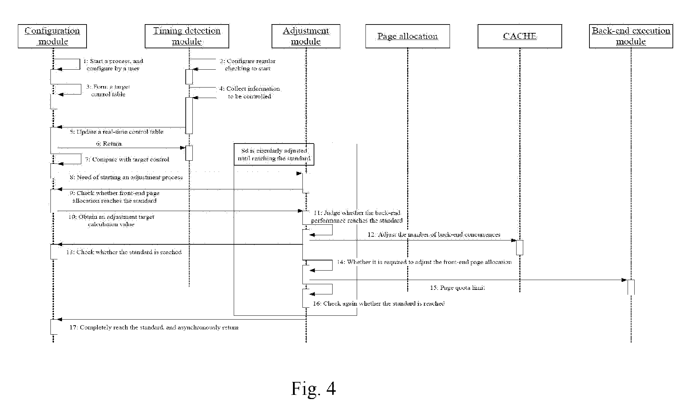

Fig. 4 is a signalling flowchart illustrating detailed process of a system resource balance adjustment method according to an embodiment of the disclosure; as shown in Fig. 4, the implementation of the technical solution of the embodiment of the disclosure comprises three modules: a configuration module (corresponding to the setting module 60 in the device embodiments), a timing detection module, an adjustment module, a page allocation module, a CACHE module and a back-end execution module (the above-mentioned five modules corresponding to the adjustment module 62 in the device embodiments), and specifically comprises the following processing:
step 1, after the system is normally powered on, a user configures required performance requirements (IOPS/bandwidth/time delay) through the configuration module; and this step corresponds to the above-mentioned step of, according to the type of disk accessed, categorizing high speed buffer memory resources and, according to service requirements, respectively determining a target value for configuration parameters of the high speed buffer memory resources of each type (i.e. step 301);
step 2, the timing detection module starts a timing checking mechanism;
step 3, the configuration module forms user data into a table form with a unified internal format (or referred to as: formatting the user data into a target control table);
step 4, the timing detection module collects various pieces of required information (time delay, bandwidth, etc.) through an IO process;
step 5, the timing detection module request to update the target control table in real time according to the various pieces of information obtained in step 4;
step 6, the configuration module returns the updated data;
step 7, the configuration module compares the updated data with a configured target value, and checks whether a condition required to be adjusted is fulfilled;
step 8, the configuration module sends a request for the need of starting an adjustment process to the adjustment module;
step 9, the adjustment module requests the configuration module for the checking of whether the front-end page allocation reaches the standard;
step 10, the configuration module calculates an adjustment target calculation value and sends same to the adjustment module; specifically, it is required to judge whether the number of pages occupied by the disks of each type has exceeded the aforementioned limitation, and if so, it is required to set a new number; in addition, it is required to re-adjust the number to a newly set occupation step by step; furthermore, the principle of the process is completely consistent with that of the adjustment process of the number of back-end concurrences;
step 11, the adjustment module judges whether the number of back-end concurrences is required to be adjusted correspondingly;
step 12, when it is determined that the front-end page allocation does not reach the standard, the adjustment module notifies the CACHE module of the resetting of the number of back-end concurrences;
step 13, the adjustment module queries to the configuration module whether the number of back-end concurrences has reached the standard;
step 14, the adjustment module calculates whether various disk limitation parameters of the front-end page allocation need to be adjusted according to the adjustment target calculation value;
step 15, if the adjustment module determines that the various disk limitation parameters of the front-end page allocation need to be adjusted, the adjustment module notifies the page allocation module and the back-end execution module of re-adjustment;
step 16, the adjustment module judges and checks whether the front-end page allocation reaches the standard; and
step 17, after determining that the front-end page allocation completely reaches the standard, the adjustment module asynchronously returns same to the configuration module.

It should be noted that the adjustment is a process and is required to be made repeatedly, and this process will not adjust too much each time, which has been mentioned in the description above.

As mentioned above, in the configuration module, the target value and the current value are required to be saved, and these indices contain the page resource required to be reserved, the IOPS corresponding to the service, the bandwidth and the Response time; and in each timing detection process, the above-mentioned indices are updated and stored, after being averaged in the timing, in real-time index table entries in the configuration module, and it is compared in the configuration module whether these table entries have seriously exceeded the standard (in practical applications, seriously exceeding the standard can be judged based on a certain number of performance indices, for example, if the memory page occupied by the SSD is only 500 MB, but none of various indices thereof reduces to 70% or less of the target value thereof; obviously, it is not required to make adjustment).

The entire adjustment process is executed through a separate thread or task, and this process may be achieved through multiple times of adjustment, for instance, with regard to the setting of back-end concurrences, it cannot be adjusted too much once; otherwise, the fluctuation of the entire back-end performance will be very severe; in addition, the page allocation adjustment is the same, for example, with regard to the SATA, the page has been exceeding the standard for 200 MB, when the 200 MB page is returned to other various modules, the allocation of the SATA service cannot be completely interrupted; otherwise, this will result in a severe fluctuation of the SATA service, and therefore the resource quantity occupied thereby should be reduced step by step, rather than being adjusted to the standard all at once. Preferably, the amplitude adjusted each time should not exceed 10% of the amplitude required to be adjusted, such that the influence on the entire performance fluctuation will be relatively small.

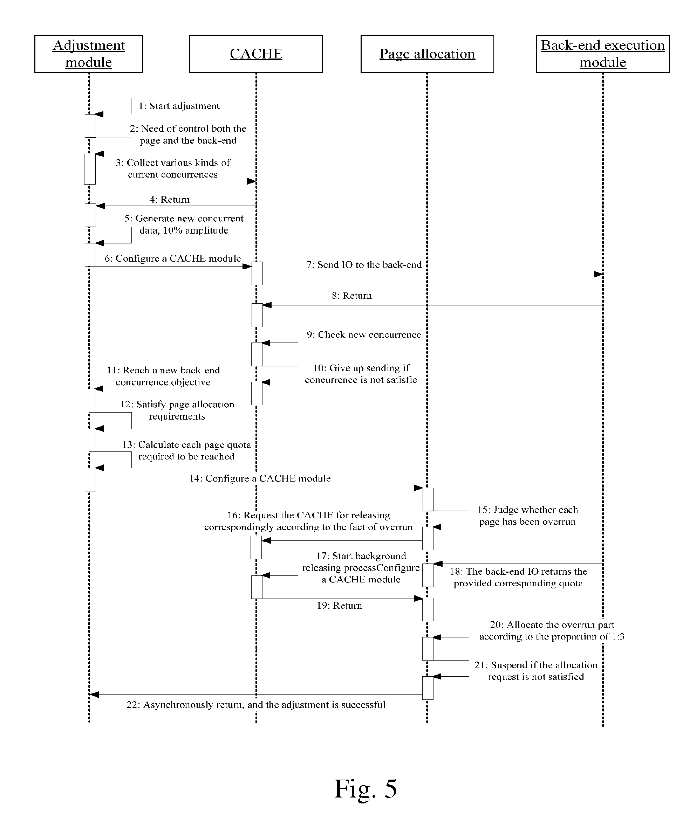

Fig. 5 is a schematic diagram showing the detailed flow of adjusting front-end page allocation and back-end resources according to an embodiment of the disclosure, i.e. detailed description of the specific operation of step 302 in Fig. 3. As shown in Fig. 5, the specific processing of an adjustment module, a CACHE module, a page allocation module and a back-end execution module are as follows:
step 1, the adjustment module determines to start adjustment;
step 2, the adjustment module determines that both the page and the back-end are required to be controlled;
step 3, the adjustment module requests the CACHE module for collecting various kinds of current concurrences;
step 4, the CACHE module returns the various kinds of concurrences;
step 5, the adjustment module generates new concurrence data, and sets an amplitude of ten percent;
step 6, the adjustment module configures the CACHE module according to the new concurrence data and the amplitude;
step 7, the CACHE module requests the back-end execution module for adjusting the number of back-end concurrences;
step 8, the back-end execution module returns a response;
step 9, the CACHE module checks new concurrence;
step 10, the CACHE module determines giving up the sending of requests not satisfying the concurrence;
step 11, the CACHE module responds to the adjustment module that a new back-end target concurrence is reached;
step 12, the adjustment module determines that the page allocation requirements are satisfied;
step 13, the adjustment module calculates each page quota required to be reached;
step 14, the adjustment module configures the page allocation module according to each calculated page quota;
step 15, the page allocation module judges whether each page has been overrun;
step 16, the page allocation module requires the CACHE module for releasing correspondingly according to the fact of overrun;
step 17, the CACHE module starts a background releasing process;
step 18, the back-end execution module returns the provided corresponding quota to the page allocation module;
step 19, the CACHE module returns a result to the page allocation module;
step 20, the page allocation module allocates the overrun part according to the proportion of 1 : 3;
step 21, the page allocation module suspends the dissatisfied allocation requests; and
step 22, the adjustment of the page allocation module is successful and is asynchronously returned to the adjustment module.

It can be seen from the description above that the entire adjustment process is relatively complex, for example, operations of eliminating clean pages, triggering disk brushing to the bottom layer, etc. Since the page types to be controlled are different (with regard to input, it is an input type page, and with regard to output, it is an output type page), in order to restore the quotas of these pages, the methods used and the costs to be paid are also different; with regard to the input page, it is only required to notify the CACHE of the elimination of the clean pages, and this process is relatively fast; and with regard to the output page, it is required to perform the disk brushing processing, and the disk input process is a slow process; therefore, the costs thereof are higher.

with regard to the entire page allocation control and back-end concurrence control, it can be seen from Fig. 5 that this is a linkage process, for example, the input page quota of the SATA is required to be compressed, and in actual, the background operation thereof is to compress the number of concurrent disk inputs corresponding to the SATA.

In summary, by means of the technical solution of the embodiments of the disclosure, and by means of a delayed response, the problem of unreasonable shared resource occupation of each type of service caused by the mixed insertion of multiple types of disks in the related art is solved, thereby allowing for each type of service to more reasonably occupy shared resources, and adjusting the performance of the entire system to a required mode.

### Device embodiments

According to the embodiments of the disclosure, a system resource balance adjustment device is provided. Fig. 6 is a structural schematic diagram of a system resource balance adjustment device according to an embodiment of the disclosure; and as shown in Fig. 6, the system resource balance adjustment device according to an embodiment of the disclosure comprises a setting module 60 and an adjustment module 62. Each module of the embodiment of the disclosure is hereinafter described in detail.

The setting module 60 is configured to, categorize high speed buffer memory resources according to the type of disk accessed, and, respectively determine, according to service requirements, a target value for configuration parameters of the high speed buffer memory resources of each category,

Wherein the configuration parameters comprise at least one of the following: a page resource required to be reserved by a service, input/output operations per second (IOPS) corresponding to the service, a bandwidth occupied by the service input output (IO) and an IO response time.

The adjustment module 62 is configured to, when a system is in operation, periodically detect whether the high speed buffer memory resources are balanced, when it is determined that the high speed buffer memory resources are required to be adjusted, adjusting front-end page allocation and/or back-end resources corresponding to imbalanced high speed buffer memory resource categories according to the target value.

When the adjustment module 62 periodically detecting whether the high speed buffer memory resources are balanced, the specific configuration is as follows:
detect whether a deviation degree of a current value and the target value of all or some of the configuration parameters of the high speed buffer memory resources of each category is greater than a pre-determined threshold value, and when it is judged that the deviation degree is greater than or equal to the pre-determined threshold value, determining that the high speed buffer memory resources are required to be adjusted.

When the adjustment module 62 adjusts the front-end page allocation and/or the back-end resources corresponding to the imbalanced high speed buffer memory resource categories, the specific configuration is as follows:
circularly adjust, according to the target value, the front-end page allocation and/or the back-end resources corresponding to the imbalanced high speed buffer memory resource categories in a preset adjustment amplitude, wherein the preset adjustment amplitude does not exceed ten percent of an overall amplitude that is required to be adjusted.

When the adjustment module 62 adjusts the front-end page allocation corresponding to the imbalanced high speed buffer memory resource categories, the specific configurations are as follows:
when a page allocation request of a service corresponding to a disk of a certain type arrives, judging whether the amount of front-end page resources occupied by the disk has exceeded a limit; and
when it is judged that the amount of front-end page resources occupied by the disk has exceeded the limit, prohibiting the front-end page allocation for the disk, and releasing the front-end page resources occupied by the disk.

Subsequently, the released page resource may be categorized according to the type of the disk; and according to the category of the released page resource, it is determined that the released page resource is still to be used by a corresponding type of disk, or determining that the released page resource is to be used by other types of disks.

When the adjustment module 62 adjusts the back-end resources corresponding to the imbalanced high speed buffer memory resource categories, the specific configuration is as follows: by controlling a total number of IOs of services, sent from the high speed buffer memory but not returned to the high speed buffer memory, corresponding to disks of each type, adjusting the back-end resources of the high speed buffer memory.

In summary, by means of the technical solution of the embodiments of the disclosure, and by means of a delayed response, the problem of unreasonable shared resource occupation of each category of service caused by the mixed insertion of multiple types of disks in the related art is solved, thereby allowing for each category of service to more reasonably occupy shared resources, and adjusting the performance of the entire system to a required mode.

Obviously, those skilled in the technical field can implement various modifications and improvements for the disclosure, without departing from the scope of the disclosure. Thus, if all the modifications and improvements belong to the scope of the claims of the disclosure and the similar technologies thereof, the disclosure is intended to contain the modifications and improvements.

### Industrial applicability

As mentioned above, the system resource balance adjustment method and device provided in the embodiments of the disclosure have the following beneficial effects: allowing for each category of service to more reasonably occupy shared resources, and adjusting the performance of the entire system to a required mode.

## Claims

1. A system resource balance adjustment method, comprising:
categorizing high speed buffer memory resources according to a type of disk accessed, and respectively determining, according to service requirements, a target value for configuration parameters of the high speed buffer memory resources of each category; and
when a system is in operation, periodically detecting whether the high speed buffer memory resources are balanced, when it is determined that the high speed buffer memory resources are required to be adjusted, adjusting front-end page allocation and/or back-end resources corresponding to imbalanced high speed buffer memory resource categories according to the target value.

2. The method as claimed in claim 1, wherein the configuration parameters comprise at least one of the following: a page resource required to be reserved by a service, input/output operations per second (IOPS) corresponding to the service, a bandwidth occupied by the service input output (IO), and an IO response time.

3. The method as claimed in claim 1, wherein periodically detecting whether the high speed buffer memory resources are balanced comprises:
detecting whether a deviation degree of a current value and the target value of all or some of the configuration parameters of the high speed buffer memory resources of each category is greater than a pre-determined threshold value, and when it is judged that the deviation degree is greater than or equal to the pre-determined threshold value, determining that the high speed buffer memory resources are required to be adjusted.

4. The method as claimed in claim 1, wherein adjusting the front-end page allocation and/or the back-end resources corresponding to the imbalanced high speed buffer memory resource categories according to the target value comprises:
circularly adjusting, according to the target value, the front-end page allocation and/or the back-end resources corresponding to the imbalanced high speed buffer memory resource categories in a pre-determined adjustment amplitude.

5. The method as claimed in claim 4, wherein the pre-determined adjustment amplitude does not exceed ten percent of an overall amplitude that is required to be adjusted.

6. The method as claimed in claim 1 or 4, wherein adjusting the front-end page allocation of the high speed buffer memory comprises:
when a front-end page allocation request of a service corresponding to a disk of a certain type arrives, judging whether the amount of front-end page resources occupied by the disk has exceeded a limit; and
when it is judged that the amount of front-end page resources occupied by the disk has exceeded the limit, prohibiting the front-end page allocation for the disk, and releasing the front-end page resources occupied by the disk.

7. The method as claimed in claim 6, further comprising:
categorizing the released page resource according to the type of the disk; and
according to the category of the released page resource, determining that the released page resource is still to be used by a corresponding type of disk, or determining that the released page resource is to be used by other types of disks.

8. The method as claimed in claim 1 or 4, wherein adjusting the back-end resources of the high speed buffer memory comprises:
by controlling a total number of IOs of services, sent from the high speed buffer memory but not returned to the high speed buffer memory, corresponding to disks of each type, adjusting the back-end resources of the high speed buffer memory.

9. A system resource balance adjustment device, comprising:
a setting module, configured to, categorize high speed buffer memory resources according to a type of disk accessed, and, respectively determine, according to service requirements, a target value for configuration parameters of the high speed buffer memory resources of each category; and
an adjustment module, configured to, when a system is in operation, periodically detect whether the high speed buffer memory resources are balanced, when it is determined that the high speed buffer memory resources are required to be adjusted, adjusting front-end page allocation and/or back-end resources corresponding to imbalanced high speed buffer memory resource categories according to the target value.

10. The device as claimed in claim 9, wherein the configuration parameters comprise at least one of the following: a page resource required to be reserved by a service, input/output operations per second (IOPS) corresponding to the service, a bandwidth occupied by the service input output (IO) and an IO response time.

11. The device as claimed in claim 9, wherein the adjustment module is configured to: detect whether a deviation degree of a current value and the target value of all or some of the configuration parameters of the high speed buffer memory resources of each category is greater than a pre-determined threshold value, and when it is judged that the deviation degree is greater than or equal to the pre-determined threshold value, determine that the high speed buffer memory resources are required to be adjusted.

12. The device as claimed in claim 9, wherein the adjustment module is configured to: circularly adjust, according to the target value, the front-end page allocation and/or the back-end resources corresponding to the imbalanced high speed buffer memory resource categories in a pre-determined adjustment amplitude.

13. The device as claimed in claim 12, wherein the pre-determined adjustment amplitude does not exceed ten percent of an overall amplitude that is required to be adjusted.

14. The device as claimed in claim 9 or 12, wherein the adjustment module is configured to:
when a page allocation request of a service corresponding to a disk of a certain type arrives, judge whether the amount of front-end page resources occupied by the disk has exceeded a limit; and
when it is judged that the amount of front-end page resources occupied by the disk has exceeded the limit, prohibit the front-end page allocation for the disk, and release the front-end page resources occupied by the disk.

15. The device as claimed in claim 14, wherein the adjustment module is further configured to:
categorize the released page resource according to the type of the disk; and
according to the category of the released page resource, determine that the released page resource is still to be used by a corresponding type of disk, or determining that the released page resource is to be used by other types of disks.

16. The device as claimed in claim 9 or 12, wherein the adjustment module is configured to:
by controlling a total number of IOs of services, sent from the high speed buffer memory but not returned to the high speed buffer memory, corresponding to disks of each type, adjust the back-end resources of the high speed buffer memory.
